# EUROPEAN PATENT SPECIFICATION

(11) **EP 1 310 155 B1**
(45) Date of publication and mention of the grant of the patent: **19.12.2007**
(21) Application number: 02079346.9
(22) Date of filing: 18.10.2002
(51) Int. Cl.: A01F 15/07

(54) **Device and method for wrapping bodies, in particular bales of harvested material**
Vorrichtung und Verfahren zum Umhüllen von Körpern, insbesondere von Erntegutballen
Dispositif et procédé permettant d'envelopper des objets, en particulier des balles agricoles

(30) Priority: 09.11.2001 EP 01204262
(43) Date of publication of application: 14.05.2003
(73) Proprietor: Welger Maschinenfabrik GmbH, 38304 Wolfenbüttel (DE)
(72) Inventor: Platon, Günter, 38321 Klein Denkte (DE)

(56) References cited:
- EP-A- 0 924 133
- EP-A- 1 083 126
- WO-A-98/41450
- DE-A- 10 011 158
- GB-A- 2 218 960

## Description

The invention relates to a device for wrapping bodies, in particular harvested material bales of hay, straw or wilted green crop, which are wound in at least one wrapping material web comprising one or more sensor means for monitoring and/or controlling the wrapping process and/or checking of the finished bale wrapping.

The invention further relates to a method for wrapping bodies, in particular harvested material bales of hay, straw or wilted green crop using an above-mentioned device.

The wrapping of bales of fresh or wilted grass with a stretchy, self-adhesive film is currently becoming ever more popular, because, in addition to other advantages, the tightly wrapped bales ripen into silage inside the film wrapping in a relatively short time, without environmentally harmful silage juice escaping, as is the case with silage clamps or tower silos.

Both round and square bales are wrapped. At present, there are essentially two bale wrapping systems which are used in practice. In the case of the "wrapping table system", successive overlapping film wrappings are wound two to three times around the entire outer bale circumference during rotation of the bale about a horizontal axis and simultaneous rotation about a vertical axis. In the case of the "rotary arm apparatus", see e.g. WO-A-984/450, although the bale again lies on a type of wrapping table, which turns the bale about its horizontal longitudinal axis, the wrapping table does not turn simultaneously about its vertical axis but instead the relative rotation between bale and supply roll is produced by a rotary arm circling around the bale and carrying the film roll at its outer end.

In addition to the bale quality, the silage quality depends in particular on the quality of the film wrapping.

The quality of the film wrapping is determined by the quality of the film, i.e. the production method (drawn or blown), film thickness, film colour (white, black, green), tear strength, tackiness and gas permeability, and in particular by the care taken by the user, i.e. precise adjustment of film prestretching, uniform and sufficient film overlap and the correct number of plies of film webs or layers.

At present, these adjustments are performed manually, such that whether or not high-grade silage is obtained depends on the amount of care taken by the operator.

The following parameters need to be taken into consideration during adjustment:
- film width
- bale diameter
- number of film plies
- number of wrappings
- film web overlap
- number of film webs or film supply rolls per bale revolution

In the case of the rotary arm apparatus, adjustment is performed as follows:

### Preset values:

- bale diameter 1.2 m
- film width: 500 mm
- degree of overlap 55%
- 4 film plies

The degree of overlap may be preset at the apparatus, e.g. by specifying the rotational speed ratio of bale to rotary arm. When wrapping is begun, the preset film overlap of the first film plies is checked visually and corrected manually.

The necessary number of rotary arm revolutions depends on the number of film plies and the bale diameter. Initially, during wrapping of the first bale, the number of revolutions of the rotary arm is counted which is necessary for the entire surface to be wrapped in film. This number of revolutions is also shown on the display of the electronic control apparatus. If film overlap is set at 55%, two film plies/layers have now been laid on the bale. The bale has turned half a revolution about its cylinder axis. If 4 film plies are desired, the counted value is multiplied by 2 (4 plies) or by 3 (6 plies) and this value is input into the electronic control unit, such that succeeding bales are automatically wrapped according to these stored preset values.

These adjustments are particularly disadvantageous to perform in the case of the round baler/downstream wrapper combinations which have come increasingly onto the market recently, since the wrapper is not visible from the tractor seat.

In addition to operator effort, this procedure has the following disadvantages:
- no overlap monitoring
- no monitoring that the preset number of film wrappings produces the preset number of plies over the entire bale surface
- predetermined settings apply only to
   a) one bale diameter
   b) one film width
   c) one film web per bale revolution
   d) one degree of overlap

As soon as at least one of the parameters a to d changes, the bale is no longer wrapped as set. If, for example, a bale diameter of 1.3 m is wrapped instead of a 1.2 m bale diameter, film wrappings are lacking over part of the circumference.

The object of the invention is to improve and simplify the above-described device with regard to adjustment and monitoring of the wrapping process.

This object is achieved with regard to the device in that a further sensor means directly or indirectly measures and/or signals the feed path of the bale in the circumferential direction of rotation of the bale.

The device and/or method according to the invention thus allow completely novel operation and monitoring, wherein adjustments and monitoring proceed automatically and preset values are reduced to a minimum. It is necessary merely to preset the number of plies of wrapping material. In the case of predetermined wrapping material width and preset wrapping material overlap, the correct number of wrapping material windings per bale to achieve the preset wrapping material plies is determined in each case by means of a first sensor means as a function of different bale diameters, wrapping material overlap and/or one or more wrapping means and in particular automatically and independently of the operator and used to control the device.

During the wrapping process, a second sensor means tests once, repeatedly or constantly the actual overlap of two successive wrapping material windings. The signals from one or both sensor means are forwarded to an alarm or information means for the operator and/or to an open-loop and/or closed-loop control means for the wrapping process, which analyses the values, performs a desired/actual value comparison and converts them into control variables for adjusting the actual values to the desired values. This automatic control and monitoring of the wrapping process is of particular advantage in the case of wrapping devices which are arranged behind the baler.

A simplified embodiment consists in checking or additionally post-checking the finished bale wrapping by means of sensor means.

Further expedient developments of the invention are revealed by the remaining subclaims and by the following description of a plurality of exemplary embodiments of the subject matter of the invention made with reference to the drawings, in which:
- Fig. 1: is a perspective, schematic representation of a rotary arm wrapping device according to the invention with a sensor means associated with an unwrapped, dotted round bale area and a sensor means associated with the wrapped round bale area and arranged on a rotary arm,
- Fig. 2: is a view according to Fig. 1 with a sensor means associated with an unwrapped circumferential area of a round bale and a sensor means for detecting when the bale is at a standstill, wherein the electronic and hydraulic control elements are omitted for the sake of clarity,
- Fig. 3: is a perspective, schematic representation of a rotary table wrapping device according to the invention with a sensor means associated with an unwrapped bale area and a sensor means associated with a wrapped bale area, and
- Fig. 4: is a schematic side view of a rotary table wrapping device with two sensor means in a different arrangement.

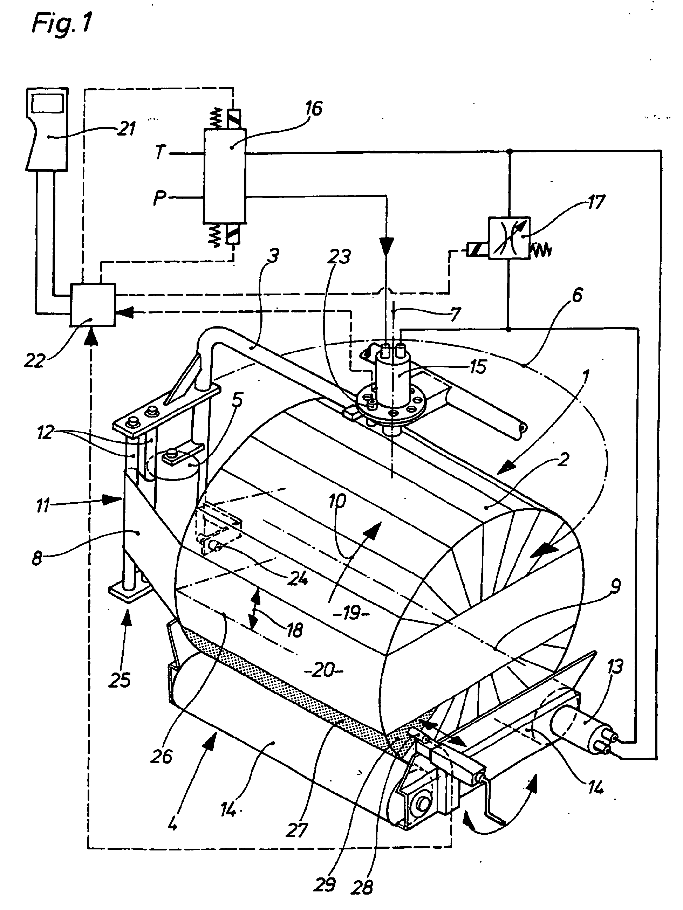

The device illustrated in Figure 1 for wrapping a bale 1 of harvested material with a stretchy and self-adhesive film 2 is an exemplary embodiment with a rotary arm 3 and a stationary wrapping table 4 for accommodating a bale 1 of harvested material, as described substantially in EP 0 234 763 A1. The rotary arm 3 carries at its outer, lower end a film supply roll 5, which is passed during the wrapping process around the bale 1 of harvested material in a rotary motion about a vertical axis 7 in a direction of rotation 6, wherein a strip of film 8 is drawn off from the film supply roll 5 and wrapped about the bale 1 of harvested material rotating in a direction of rotation 10 about a horizontal axis of rotation 9. Instead of film, a different wrapping material may also be used, such as netting for example. As is clear from Figure 1, the entire outer bale circumference has been wound round with overlapping strips of film, for example twice, such that the wrapping process is shown directly before completion, which is achieved in that a cutting/clamping means, not shown, severs the film portion 8 in the free area between bale 1 and rotary arm 3 and holds it ready by clamping for wrapping a further bale 1.

As is additionally clear from Figure 1, a film stretching device 11 is fitted in the movement path of the film strip 8 between the film supply roll 5 and the bale 1 of harvested material, which stretching device 11 comprises at least two vertically disposed stretching rollers 12. The film stretching device 11 is combined into a structural unit with the supply roll 5 and fitted to the rotary arm 1 as such.

A rotary drive is provided for the round bale. This consists of a hydraulic motor 13, indicated only schematically, which drives one or both rollers 14. A further rotary drive, which likewise consists of a hydraulic motor 15, is provided for the rotary arm 3. Both hydraulic motors 13, 15 are connected via fluid lines to hydraulic valves 16, 17 and are subject to open- or closed-loop control, which controls by the open- or closed-loop system the speed of revolution of the bale 1 relative to the speed of revolution of the rotary arm 3 to produce a uniform, presettable wrapping pattern on the bale 1. This open- or closed-loop control proceeds in such a way that, by selecting the speed ratio of bale 1 to rotary arm 3, an overlap distance 18 is predetermined between two film webs 19, 20 which is intended to remain constant during the entire wrapping process.

The open- or closed-loop control system illustrated in the drawing is an exemplary embodiment of the invention. This consists substantially of an operating device 21 arranged in a tractor cab, which device 21 is in active connection with an open- or closed-loop control unit 22. In addition to the hydraulic motors 13, 15, a plurality of sensor means are connected to the open- or closed-loop control unit 22 as actuators:

A first sensor means 23 detects the actual speed of the rotary arm 3. A second sensor means 24 is arranged on the rotary arm 3 and measures during the wrapping process the overlap distance 18 between the film web 20 coming from the film stretching device 11 and the previous film web 19 located on the bale 1 or checks compliance with a predetermined overlap distance. The sensor means 24 is arranged between film web 20 and film supply roll 5 at a level within the film width which corresponds to the preset overlap distance and is so aligned in the initial and final position 25 of the rotary arm 3 illustrated in Fig. 1 that the area 26 of the previous film web 19 which is lower in the direction of rotation 10 of the bale 1 lies in the response zone of the sensor means 24, i.e. in the event of proper bale wrapping the sensor means 24 detects film constantly but immediately detects an unwrapped area 27 if the overlap distance 18 is exceeded. This signal is transmitted to the operator and/or the open-/closed-loop control unit 21, 22, which adjusts to the desired overlap as quickly as possible.

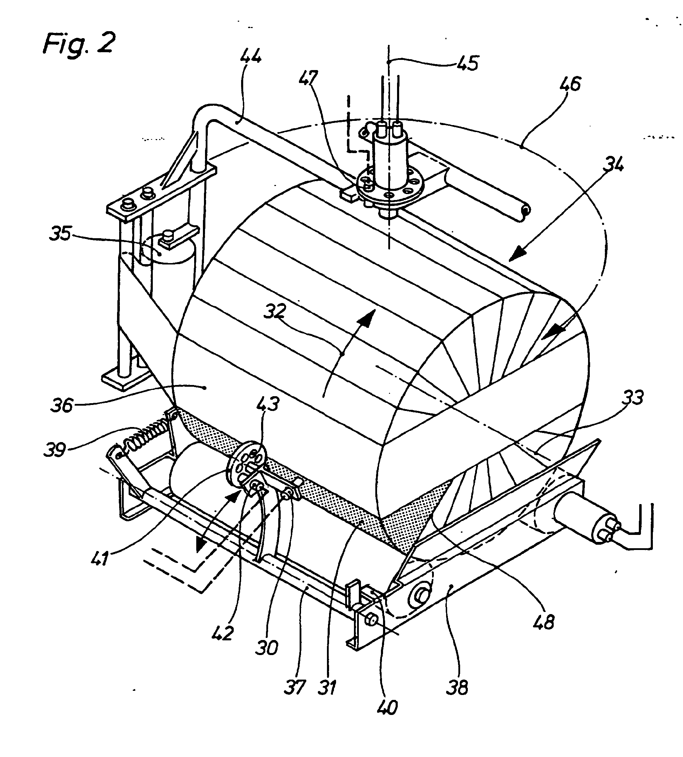

By arranging a plurality of sensors 24 at a distance above one another, the degree of deviation of the actual overlap from the desired overlap could also be measured and signalled. Since, for example, 750 mm wide films are processed with a different degree of overlap (70 %), the sensor means 24 is height-adjustable within the appropriate range. An undesirable 100% film overlap may be prevented for example with a bale standstill sensor 42, shown and explained in Fig. 2, which automatically interrupts or corrects the wrapping process if the bale comes to a standstill or signals the bale standstill to the operator. The basic setting of the bale 1 to rotary arm 3 speed ratio, which determines the degree of overlap, is performed in known manner by electronic or manual actuation of the hydraulic valve 17 of the hydraulic motors 13, 15 connected in series. According to the invention, control of the hydraulic valve 17 is performed by the sensor means 24 using film overlap as the controlled variable. However, it is in principle also possible to combine film overlap as a controlled variable with a drive system in which feed of the bale 1 is measured in the circumferential/rotational direction 10 per unit time and this controlled variable is applied to control of the rotary drive 15 of the rotary arm 3.

A third sensor means 28 is provided, to establish how many rotary arm revolutions are necessary to achieve a first complete wrapping of the entire bale 1. The sensor means 28 is associated with the unwrapped bale area 27 shown as a dotted zone, which area 27 is last to be wound in a film web. This is achieved in that the sensor means 28 is arranged on the unwrapped bale end 29, being offset circumferentially by a small distance contrary to the direction of rotation 10 of the bale 1 relative to the film portion 20 applied to the bale 1 and drawn off from the film supply roll 5. Since the bale 1 is driven at its circumference, the feed path of a bale 1 is the same, be the diameter small or large. A larger bale diameter merely requires a larger number of windings. This sensor means 28 allows the establishment of the in each case correct number of rotary arm revolutions not only in the case of different bale diameters but also in the case of devices with two or more film webs 8 per revolution of the rotary arm 3 or different film widths as a prerequisite for automatic running of the wrapping process in the event of varying parameters. For adaptation to different bale dimensions, the sensor means 28 is adjustable.

The mode of operation of the device according to the invention is as follows:

The following preset values are input into the operating device 21, for example:
film overlap: 60%
number of wrapping plies: 4
safety wrapping (additional rotary arm revolution): 1

The bale 1 rotates during the wrapping operation in the direction of arrow 10. At the same time, the rotary arm 3 circles round the bale 1 with the film supply roll 5 in the direction of the arrow 6, wherein a film web 20 is drawn off from the supply roll 5 and laid on the unwrapped bale surface so as partially to overlap the previous film web 19. The rotary arm position 25 illustrated in Fig. 1 corresponds to an initial or final position after one complete revolution of the rotary arm 3. The sensor means 24 attached to the rotary arm 3 is directed in this rotary arm position 25 towards the lower film area of the previous film web 19, the lower edge 26 of which is shown by dash-dotted lines. As soon as the overlap of the two film webs 19, 20 becomes smaller during a rotary arm rotation than preset, the open-/closed-loop control unit 22 receives a signal, whereupon the bale 1 to rotary arm 3 speed ratio is so changed by actuating the electronically actuatable power control valve 17 that the sensor 24 again lies in the film area 26. The bale 1 illustrated in Fig. 1 has already been wrapped in film as far as the dotted area 27. The first sensor means 23 has measured the rotary arm revolutions up to the wrapping state illustrated and stored them in the memory unit. On the next revolution of the rotary arm 3, the dotted area 27 is covered with film. This is recognised and signalled to the open-/closed-loop control unit 22 by the sensor means 28. There are now two plies/film layers everywhere on the bale 1, which bale 1 has turned a half revolution about its own axis 9. The computer now adds the number of predetermined safety windings to the measured number of rotary arm revolutions and multiplies this number by the factor two and allows the rotary arm 3 to run on automatically until the complete, determined number of rotary arm revolutions has been achieved. Upon completion of the wrapping process, the bale comprises 4 film plies or layers. If the bale diameter now changes or a 750 mm wide film is used instead of a 500 mm wide film, the open-/closed-loop control unit 22 calculates in each case automatically the correct number of rotary arm revolutions to apply 4 plies of film to the bale 1 by means of the number of rotary arm revolutions measured by the sensor means 23 as a function of the sensor means 28. The operator does not have to effect any manipulations. As early as during the first full rotary arm revolution and then during further revolutions, the second sensor means 24 monitors the preset overlap 18 of the film webs 19, 20 and signals deviations, which are immediately adjusted automatically by the open-/closed-loop control unit 22. Thus, proper control and monitoring of the wrapping process is ensured without visual monitoring by the operator. A bale standstill or a feed path of the bale 1 in the direction of circumferential rotation 10 of the bale 1 which deviates substantially from the preset degree of film overlap may be signalled by the sensor means 42 illustrated in Fig. 2 and taken into account during control. Tears in the film or the end of a film supply roll is signalled by known means, which influence control accordingly. It is also possible, in the context of quality control, to check or post-check the finished bale wrapping during a bale revolution.

The exemplary embodiment according to Figure 2 shows a sensor means 30 for detecting the last wound bale area 31, which is shown as a dotted area. In this Example, the sensor means 30 is associated with the unwrapped circumferential bale side and is offset by a small distance contrary to the direction of rotation 32 of the harvested material bale 34 rotating about its cylinder axis 33 during the wrapping process relative to the film web 36 drawn off the film supply roll 35. The sensor means 34 is arranged on a pivoted lever 37, which is mounted fixedly but rotatably on the frame 38 and is drawn by a spring 39 against a limit stop 40. The pivoted lever 37 comprises a tracer roll 41, which runs over the bale surface such that the sensor means 30 is held at a constant distance from the bale surface during bale rotation about its axis 33. The tracer roll 41 simultaneously takes the form of a sensor means 42 to sense when the bale is at a standstill and of a feed meter for the bale 34. To this end, the tracer roll 41 is provided with a plurality of pulse generators 43 distributed about the circumference. If the pulses are absent during rotation of the rotary arm 44 about the axis 45 in the direction of the arrow 46, this is signalled by the sensor means 42 of an open-/or closed-loop control unit, not shown, which influences control accordingly. Furthermore, the control unit counts the pulses of the tracer wheel 41 in each case during one revolution of the rotary arm 44 about the vertical axis 45. The revolutions of the rotary arm 44 are detected by a third sensor means 47. In this way, the actual film overlap may be checked via the feed measurement; this overlap must not be greater during one rotary arm revolution than the overlap distance 18 between two overlapping film webs 19, 20, c.f. Fig. 1. Moreover, the sensor means 30 detects when the film strip 48 laid initially on the bale 34 moves in front of its working area. The sensor means 47 may count the rotary arm revolutions, until the sensor means 48 trips, i.e. the bale 34 is fully wrapped with film for the first time. Evaluation of the signal values proceeds in accordance with the procedure described in Figure 1.

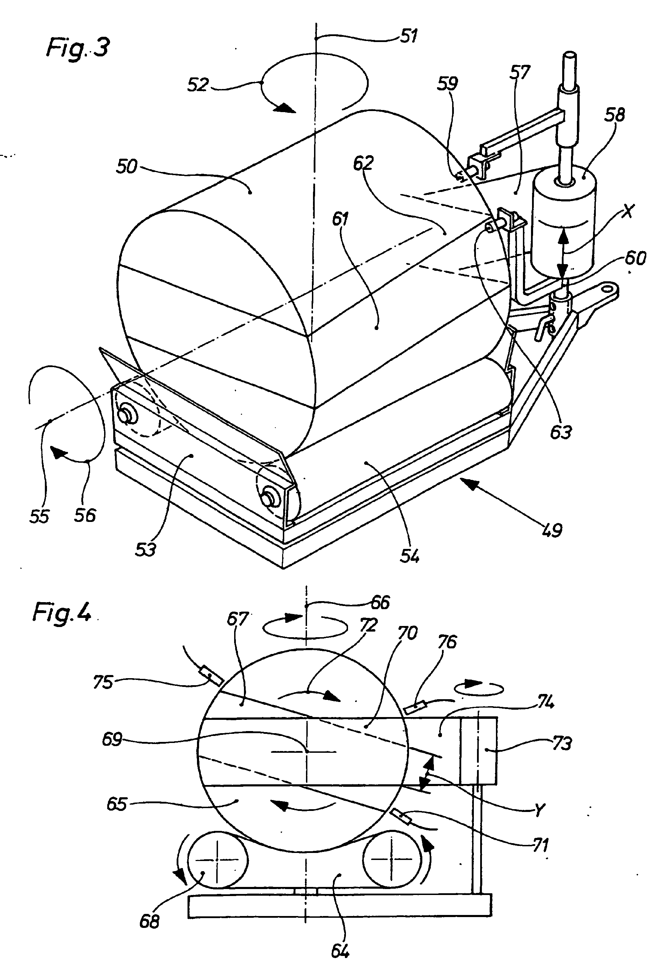

The embodiment according to Figure 3 shows a rotary table device 49 for wrapping a bale 50 of harvested material. This consists substantially of a wrapping table 53 drivable in the direction of rotation 52 about a vertical axis 51 and having drivable, spacedly arranged rollers 54, which rotate the harvested material bale 50 resting thereon simultaneously in the direction of rotation 56 about its cylinder axis 55, wherein the bale 50 takes off a film web 57 from a film supply roll 58 via a stretching device, not shown, and wraps it around itself. For details of the structure and mode of operation of such a rotary table device, reference may be made to EP 0367529 B1. As is visible from Fig. 3, a first sensor means 59 is attached fixedly but height-adjustably to the support 60 of the film supply roll 58. For adaptation to different bale dimensions, the sensor means 59 may also be arranged in such a way that its distance from the bale 50 is adjustable. Where the overlap is set at 60%, the sensor means 59 is arranged at such a height relative to the drawn-off film web 57 that, with the preset overlap distance X, the sensor means 59 just still covers the upper area of the film portion 61 lying on the bale 50. As soon as the overlap falls below the preset overlap X, e.g. due to excessively fast rotation of the bale 50 in the direction of rotation 56 relative to rotation of the bale 50 about the vertical axis 51, the unwrapped area 62 moves in front of the sensor means 59, which sends a corresponding signal to the operator or the machine control system, in order to return to the desired overlap. In this way, constant monitoring of the desired film overlap is ensured.

A bale standstill sensor, not shown, signals that the bale 50 is not turning about the cylinder axis 55 at the same time as turning about the vertical axis 51. In this way, wrapping of the bale with 100% film overlap may be prevented.

It is essential that the preset minimum overlap distance be complied with and therefore also monitored. Exceeding of a maximum overlap distance may be prevented by correct setting of the speed ratio of bale rotation about the two axes 55, 51, wherein feed measurement of the bale 50 at its circumference in the direction of rotation 56 about its axis 55 per rotation of the bale 50 about the vertical axis 51 could also serve here for monitoring. The measured feed path per bale rotation must not be smaller than a minimum amount, which is obtained from the film width and the preset degree of overlap. Thus, the film overlap within precisely one band width (minimum/maximum overlap) may be monitored and controlled.

The second sensor means 63 is associated with the unwrapped bale area 62 during virtually half a bale rotation about the axis 55 and is arranged likewise in adjustable manner on the support 60 for the film supply roll 58 close above the film web 57 drawn off from the film supply roll 58. By means of this sensor means 63 and a further sensor means for the speed of rotation of the bale 50 about the axis 51, the number of bale revolutions about the axis 51 is measured until the entire bale surface has been wrapped in film for a first time. Conversion of this measured value for control of bale rotation about its own axis 55 proceeds as for the exemplary embodiment according to Figure 1. The sensor means 59, 63 are arranged outside the path of revolution of the bale 50 about the axis 51. One of the sensor means may also take the form of a revolution counter.

Fig. 4 is a schematic side view of a rotary table arrangement at the beginning of a wrapping process. The rotary table 64 has turned with the bale 65 about a vertical axis 66 and wrapped a first film web 67 about the bale 65 after one complete revolution. The rollers 68 then turn the bale 65 about its own axis 69. The bale turning path measured at the circumference amounts per bale revolution about the vertical axis 65 to the film width minus the overlap distance of two film webs. During the second rotation of the bale 65 about the vertical axis 66, a second film web 70 was wound about the bale 65, which overlaps the first film web 69 by the distance Y. A first sensor means 71 has been arranged in the direction of rotation 72 of the bale 65 at a somewhat smaller distance from the film web 74 arriving from the film supply roll 73 than corresponds to the desired feed path of the bale 65 during one bale rotation about the axis 66, i.e. the film width minus the overlap distance. In the case of proper overlap, the sensor means 71 detects film. If the bale 65 is turned by too small a distance, the film webs 67, 70 overlap by too much. After the relevant bale rotation about the axis 66, the sensor 71 does not detect any film and signals this to the open-/closed-loop control unit, which corrects the speed ratio in the direction of the preset overlap.

The sensor 71 may preferably be so constructed that it detects one or more film layers. Thus, continuous monitoring of the wrapping process would also be possible with this sensor means with more than two film layers. From the third bale rotation, the sensor would have then to detect two film layers. At the diametrally opposed bale side, a sensor means 75 could be arranged precisely outside the second film web 70, which detects whether the bale has not been moved by too great a feed path in the direction of rotation 72, which would lead to too small a film overlap. Thus, it is possible to check whether the actual overlap lies within a tolerance band. It is possible to arrange one or more sensors 71, 75 only after a quarter rotation of the bale 65 or in addition to those first mentioned. Finally, a further sensor means 76 has been provided closely above the drawn off film web 74, which establishes when the last bale area is wrapped. This is arranged above the film web 74 coming from the film supply roll 73 and directed towards the unwrapped end area, which is the last to be wound round with film during rotation of the bale 65 about the axis 69. Evaluation of this sensor signal proceeds in accordance with the Example described in Figure 1.

## Claims

1. A device for wrapping bodies, in particular harvested material bales (1, 34, 50, 65) of hay, straw or wilted green crop, which are wound in at least one wrapping material web (8, 36, 57, 74) comprising one or more sensor means (23; 24; 28, 30, 47, 59, 63, 71, 75, 76) for monitoring and/or controlling the wrapping process and/or for checking the finished bale wrapping, **characterised in that** a further sensor means (41, 42 ,43) directly or indirectly measures and/or signals the feed path of the bale (34) in the circumferential direction of rotation (32) of the bale (34).

2. A device according to claim 1, **characterised by** one or more sensor means (24, 42, 43, 63, 71, 75) for monitoring and/or controlling the correct overlap of two wrapping material plies (19, 20, 57, 61, 77, 74).

3. A device according to claim 1 or claim 2, **characterised in that** at least one sensor means (24, 63, 71, 75) is arranged between the wrapping material web (20, 57, 74) coming from a wrapping material supply roll (5, 58, 73) and/or the previous wrapping material web (19, 61, 67) located on the bale (1, 50, 65).

4. A device according to one of claims 1 to 3, **characterised by** one or more sensor means (23, 28, 30, 42, 43, 47, 59, 76) for monitoring and/or controlling the complete, presettable wrapping of the bale (1, 34, 50, 65) of harvested material.

5. A device according to claim 1 or claim 4, **characterised in that** at least one sensor means (28, 30, 59, 76) is associated with the unwrapped bale side (27, 31, 62), being offset circumferentially by a small distance contrary to the direction of rotation (10, 32, 56, 72) of the bale (1, 34, 50, 65) relative to the wrapping material web (20, 36, 57, 74) coming from a wrapping material supply roll (5, 35, 58, 73), which sensor means (28, 30, 59, 76) detects that the bale (1, 34, 50, 65) is covered with wrapping material.

6. A device according to one of claims 1 to 5, **characterised in that** one or more sensor means (59, 63, 71, 75, 76) is/are arranged on a wrapping table (49, 64), which turns the bale (50, 65) during wrapping operation about both a horizontal (33, 55) and a vertical axis (51, 66).

7. A device according to claims 1 to 6, **characterised in that** at least one sensor means (24) is arranged on one or more rotary arms (3) circling round the bale (1) during wrapping operation.

8. A device according to one or more of the preceding claims, **characterised by** an electronic open-/closed-loop control unit (22), which comprises at least one sensor means (23, 47) for detecting and/or displaying the number of wrapping material windings on the bale (1, 34).

9. A device according to claim 8, **characterised in that** the number of wrapping material windings may be detected up to the first complete wrapping of the entire bale surface as a function of the sensor means (28, 30, 59, 76).

10. A device according to claim 9, **characterised in that** the number of wrapping material windings may be stored up to the first complete wrapping of a bale (1, 34, 50, 65) in a memory unit of the electronic open-/closed-loop control unit (22).

11. A device according to one of preceding claims 8 to 10, **characterised in that** the electronic open-/closed-loop control unit (22) comprises an input unit (21), into which the desired number of wrapping material plies or layers may be input.

12. A device according to one or more of the preceding claims, **characterised in that** the electronic open-/closed-loop control unit (22) comprises a computer which, as a function of the detected and/or preset values, itself determines the number of wrapping material windings, i.e. the number of bale revolutions about the axis (51, 66) or the number of rotary arm revolutions (3, 44), required for the preset number of wrapping material plies to be reached.

13. A device according to claim 12, **characterised in that** the number of wrapping material windings is determined taking into account a safety factor which may be preset in an input unit (21).

14. A device according to one or more of preceding claims 8 to 11, **characterised in that** the electronic open-/closed-loop control unit (22) comprises an input unit (21), into which the degree of overlap (18, X, Y) of two successive wrapping material windings (19, 20, 57, 61, 67, 70) may be directly or indirectly input.

15. A device according to one or more of the preceding claims, **characterised in that** the actual degree of overlap may be directly or indirectly influenced in the event of deviation from the desired degree of overlap as a function of the sensor means (24, 42, 43, 63, 71, 75).

16. A device according to claim 15, **characterised in that** the sensor means (24, 42, 43, 63, 71, 75) at least signals to the operator deviations from the desired degree of overlap.

17. A device according to one or more of the preceding claims, **characterised in tha**t a gloss sensor is provided, which detects the unwrapped bale surface as matt and the wrapped bale surface as glossy.

18. A device according to one or more of preceding claims 1 to 16, **characterised in that** a conductivity sensor is provided, which responds to the different conductivities of a bale (1) with and without a wrapping of wrapping material (2).

19. A device according to one or more of preceding claims 1 to 16, **characterised in that** the device comprises a pressure sensor, which detects the different measured feed pressure values of a bale surface with and without wrapping material.

20. A device according to one or more of the preceding claims, **characterised in that** a sensor means (24, 42, 63) responds to different wrapping material thicknesses through overlapping wrapping material webs.

21. A device according to one or more of the preceding claims, **characterised in that** a sensor means (24, 42, 63, 71) detects different wrapping material colours or coloured markings.

22. A device according to one or more of the preceding claims, **characterised in that** a sensor means (24, 29, 42, 59, 63, 71, 76) responds to different light or sound reflections from the wrapped and unwrapped bale surface.

23. A device according to one or more of the preceding claims, **characterised in that** one or more sensor means may be conformed to different bale dimensions and/or wrapping material widths.

24. A device according to one or more of the preceding claims, **characterised in that** the sensor means (24, 63, 71, 75) may be adjusted to preset overlaps (18, X, Y) of two wrapping material webs (19, 20, 57, 61, 67, 70).

25. A device according to one or more of the preceding claims, **characterised in that** a sensor means (24, 29, 42, 59, 63, 71, 75, 76) is arranged at a distance from the bale surface.

26. A device according to one or more of the preceding claims, **characterised in that** the sensor means (30, 42, 43) is carried by a guide element (41) following the bale contour.

27. A device according to one or more of the preceding claims, **characterised in that** a sensor (42, 43) is provided for establishing whether the bale (34) turns during wrapping operation.

28. A device according to claim 27, **characterised in that** the sensor (42, 43) is in direct or indirect active connection with at least one further sensor means (47) and the open-/closed-loop control unit (22)

29. A device according to claim 28, **characterised in that** the sensor (42, 43) is coupled to the electronic open-/closed-loop control unit (22) and **in that** the wrapping process may be influenced directly or indirectly by the sensor (42, 43).

## Patentansprüche

1. Vorrichtung zum Umhüllen von Körpern, insbesondere von Erntegutballen (1, 34, 50, 65) aus Heu, Stroh oder angewelktem Grüngut, welche mit wenigstens einer Umhüllmaterialbahn (8, 36, 57, 74) umwickelt werden, umfassend eine oder mehrere Sensoreinrichtung/en (23, 24, 28, 30, 42, 43, 47, 59, 63, 71, 75, 76) zur Überwachung und/oder Steuerung des Umhüllprozesses und/oder zur Kontrolle der fertigen Ballenumhüllung, **dadurch gekennzeichnet, daß** eine weitere Sensoreinrichtung (41, 42, 43) den Vorschubweg des Ballens (34) in Umfangs-Drehrichtung (32) des Ballens (34) direkt oder indirekt mißt und/oder signalisiert.

2. Vorrichtung nach Anspruch 1, **gekennzeichnet durch** eine oder mehrere Sensoreinrichtung/en (24, 42, 43, 63, 71, 75) zur Überwachung und/oder Steuerung der korrekten Überlappung zweier Umhüllmateriallagen (19, 20, 57, 61, 77, 74).

3. Vorrichtung nach Anspruch 1 oder 2, **dadurch gekennzeichnet, daß** wenigstens eine Sensoreinrichtung (24, 63, 71, 75) zwischen der von einer Umhüllmaterialvorratsrolle (5, 58, 73) kommenden Umhüllmaterialbahn (20, 57, 74) und/oder der vorhergehenden, auf dem Ballen (1, 50, 65) befindlichen Umhüllmaterialbahn (19, 61, 67) angeordnet ist.

4. Vorrichtung nach einem der Ansprüche 1 bis 3, **gekennzeichnet durch** eine oder mehrere Sensoreinrichtung/en (23, 28, 30, 42, 43, 47, 59, 76) zur Überwachung und/oder Steuerung der vollständigen, vorgebbaren Umhüllung des Erntegutballens (1, 34, 50, 65).

5. Vorrichtung nach Anspruch 1 oder 4, **dadurch gekennzeichnet, daß** wenigstens eine Sensoreinrichtung (28, 30, 59, 76) der unbewickelten Ballenseite (27, 31, 62) in kleinem Abstand entgegen der Drehrichtung (10, 32, 56, 72) des Ballens (1, 34, 50, 65) umfangsversetzt zur von einer Umhüllmaterialvorratsrolle (5, 35, 58, 73) kommenden Umhüllmaterialbahn (20, 36, 57, 74) zugeordnet ist, welche eine Belegung des Ballens (1, 34, 50, 65) mit Umhüllmaterial erkennt.

6. Vorrichtung nach einem der Ansprüche 1 bis 5, **dadurch gekennzeichnet, daß** eine oder mehrere Sensoreinrichtungen (59, 63, 71, 75, 76) an einem Wickeltisch (49, 64) angeordnet ist/sind, der den Ballen (50, 65) während des Umhüllbetriebes sowohl um eine horizontale (33, 55) als auch eine vertikale Achse (51, 66) dreht.

7. Vorrichtung nach Anspruch 1 bis 6, **dadurch gekennzeichnet, daß** wenigstens eine Sensoreinrichtung (24) an einem oder mehreren den Ballen (1) während des Umhüllbetriebes umkreisenden Dreharm (3)/en angeordnet ist.

8. Vorrichtung nach einem oder mehreren der vorhergehenden Ansprüche, **gekennzeichnet durch** eine elektronische Steuer- /Regeleinheit (22), welche zumindest eine Sensoreinrichtung (23, 47) zur Erfassung und/oder Anzeige der Anzahl der Umhüllmaterialumwicklungen auf dem Ballen (1, 34) aufweist.

9. Vorrichtung nach Anspruch 8, **dadurch gekennzeichnet, daß** die Anzahl der Umhüllmaterialumwicklungen bis zur erstmaligen vollständigen Umhüllung der ganzen Ballenoberfläche in Abhängigkeit von der Sensoreinrichtung (28, 30, 59, 76) erfaßbar ist.

10. Vorrichtung nach Anspruch 9, **dadurch gekennzeichnet, daß** die Anzahl der Umhüllmaterialumwicklungen bis zur erstmaligen vollständigen Umhüllung eines Ballens (1, 34, 50, 65) in einer Speichereinheit der elektronischen Steuer-/ Regeleinheit (22) abgespeichert ist.

11. Vorrichtung nach einem der vorhergehenden Ansprüche 8 bis 10, **dadurch gekennzeichnet, daß** die elektronische Steuer- /Regeleinheit (22) eine Eingabeeinheit (21) aufweist, in die die gewünschte Anzahl von Umhüllmateriallagen gleich (-schichten) eingebbar ist.

12. Vorrichtung nach einem oder mehreren der vorhergehenden Ansprüche, **dadurch gekennzeichnet, daß** die elektronische Steuer- /Regeleinheit (22) einen Rechner aufweist, der in Abhängigkeit von den erfaßten und/oder vorgegebenen Werten die Anzahl der Umhüllmaterialumwicklungen, d.h. die Anzahl der Ballenumdrehungen um die Achse (51, 66) oder die Anzahl der Dreharmumdrehungen (3, 44) bis zum Erreichen der vorgegebenen Anzahl von Umhüllmateriallagen selbst ermittelt.

13. Vorrichtung nach Anspruch 12, **dadurch gekennzeichnet, daß** die Anzahl der Umhüllmaterialumwicklungen unter Berücksichtigung eines in einer Eingabeeinheit (21) vorgebbaren Sicherheitsfaktors ermittelt wird.

14. Vorrichtung nach einem oder mehreren der vorhergehenden Ansprüche 8 bis 11, **dadurch gekennzeichnet, daß** die elektronische Steuer-/Regeleinheit (22) eine Eingabeeinheit (21) aufweist, in die der Überlappungsgrad (18, X, Y) von zwei aufeinanderfolgenden Umhüllmaterialumwicklungen (19, 20, 57, 61, 67, 70) direkt oder indirekt eingebbar ist.

15. Vorrichtung nach einem oder mehreren der vorhergehenden Ansprüche, **dadurch gekennzeichnet, daß** der Ist-Überlappungsgrad bei Abweichungen vom Soll-Überlappungsgrad in Abhängigkeit von der Sensoreinrichtung (24, 42, 43, 63, 71, 75) direkt oder indirekt beeinflußbar ist.

16. Vorrichtung nach Anspruch 15, **dadurch gekennzeichnet, daß** die Sensoreinrichtung (24, 42, 43, 63, 71, 75) zumindest Abweichungen vom Soll-Überlappungsgrad dem Bediener signalisiert.

17. Vorrichtung nach einem oder mehreren der vorhergehenden Ansprüche, **dadurch gekennzeichnet, daß** ein Glanzsensor vorgesehen ist, welcher die unbewickelte Ballenoberfläche als matt und die bewickelte als glänzend erkennt.

18. Vorrichtung nach einem oder mehreren der vorhergehenden Ansprüche 1 bis 16, **dadurch gekennzeichnet, daß** ein Leitfähigkeitssensor vorgesehen ist, der auf die unterschiedliche Leitfähigkeit eines Ballens (1) mit und ohne Umwicklung mit Umhüllmaterial (2)anspricht.

19. Vorrichtung nach einem oder mehreren der vorhergehenden Ansprüche 1 bis 16, **dadurch gekennzeichnet, daß** die Vorrichtung einen Drucksensor aufweist, welcher die unterschiedlichen Anströmdruckmeßwerte einer Ballenoberfläche mit und ohne Umhüllmaterial erkennt.

20. Vorrichtung nach einem oder mehreren der vorhergehenden Ansprüche, **dadurch gekennzeichnet, daß** eine Sensoreinrichtung (24, 42, 63) auf unterschiedliche Umhüllmaterialdicken durch sich überlappende Umhüllmaterialbahnen anspricht.

21. Vorrichtung nach einem oder mehreren der vorhergehenden Ansprüche, **dadurch gekennzeichnet, daß** eine Sensoreinrichtung (24, 42, 63, 71) unterschiedliche Umhüllmaterialfarben oder Farbmarkierungen erkennt.

22. Vorrichtung nach einem oder mehreren der vorhergehenden Ansprüche, **dadurch gekennzeichnet, daß** eine Sensoreinrichtung (24, 29, 42, 59, 63, 71, 76) auf unterschiedliche Licht- oder Schallreflexionen der bewickelten und der unbewickelten Ballenoberfläche anspricht.

23. Vorrichtung nach einem oder mehreren der vorhergehenden Ansprüche, **dadurch gekennzeichnet, daß** eine oder mehrere Sensoreinrichtung/en an unterschiedliche Ballenabmessungen und/oder Umhüllmaterialbreiten angepaßbar ist/sind.

24. Vorrichtung nach einem oder mehreren der vorhergehenden Ansprüche, **dadurch gekennzeichnet, daß** die Sensoreinrichtung (24, 63, 71, 75) auf vorgegebene Überlappungen (18,X, Y) zweier Umhüllmaterialbahnen (19, 20, 57, 61, 67, 70) einstellbar ist.

25. Vorrichtung nach einem oder mehreren der vorhergehenden Ansprüche, **dadurch gekennzeichnet, daß** eine Sensoreinrichtung (24, 29, 42, 59, 63, 71, 75, 76) im Abstand zur Ballenoberfläche angeordnet ist.

26. Vorrichtung nach einem oder mehreren der vorhergehenden Ansprüche, **dadurch gekennzeichnet, daß** die Sensoreinrichtung (30, 42, 43) durch ein der Ballenkontur folgendes Führungselement (41) getragen wird.

27. Vorrichtung nach einem oder mehreren der vorhergehenden Ansprüche, **dadurch gekennzeichnet, daß** ein Sensor (42, 43) vorgesehen ist zur Feststellung, ob sich der Ballen (34) während des Umhüllbetriebes dreht.

28. Vorrichtung nach Anspruch 28, **dadurch gekennzeichnet, daß** der Sensor (42, 43) mit wenigstens einer weiteren Sensoreinrichtung (47) und der Steuer- und/oder Regeleinheit (22) direkt oder indirekt in Wirkverbindung steht.

29. Vorrichtung nach einem oder mehreren der Ansprüche 28 bis 30, **dadurch gekennzeichnet, daß** der Sensor (42, 43) mit der elektronischen Steuer- /Regeleinheit (22) gekoppelt ist und daß der Wickelprozeß direkt oder indirekt durch den Sensor (42, 43) beeinflußbar ist.

## Revendications

1. Dispositif pour enrubanner des corps, en particulier des balles agricoles (1, 34, 50, 65) de foin, de paille ou de culture fourragère desséchée, qui sont enroulées dans au moins une bande de matériau d'enrubannage (8, 36, 57, 74) comprenant un ou plusieurs moyens de capteur (23, 24, 28, 30, 47, 59, 63, 71, 75, 76) pour surveiller et/ou commander le processus d'enrubannage et/ou pour vérifier l'enrubannage de balle fini, **caractérisé en ce qu'**un moyen de capteur supplémentaire (41, 42, 43) mesure et/ou signale directement ou indirectement le trajet d'acheminement de la balle (34) dans la direction circonférentielle de rotation (32) de la balle (34).

2. Dispositif selon la revendication 1, **caractérisé par** un ou plusieurs moyens de capteur (24, 42, 43, 63, 71, 75) pour surveiller et/ou commander le chevauchement approprié de deux plis de matériau d'enrubannage (19, 20, 57, 61, 77, 74).

3. Dispositif selon la revendication 1 ou la revendication 2, **caractérisé en ce qu'**au moins un moyen de capteur (24, 63, 71, 75) est agencé entre la bande de matériau d'enrubannage (20, 57, 74) provenant d'un rouleau d'alimentation en matériau d'enrubannage (5, 58, 73) et/ou la bande de matériau d'enrubannage précédente (19, 61, 67) située sur la balle (1, 50, 65).

4. Dispositif selon l'une des revendications 1 à 3, **caractérisé par** un ou plusieurs moyens de capteur (23, 28, 30, 42, 43, 47, 59, 76) pour surveiller et/ou commander l'enrubannage complet, pouvant être prédéfini de la balle (1, 34, 50, 65) agricole.

5. Dispositif selon la revendication 1 ou la revendication 4, **caractérisé en ce qu'**au moins un moyen de capteur (28, 30, 59, 76) est associé au côté de balle non enrubanné (27, 31, 62), étant décalé de manière circonférentielle d'une courte distance contraire à la direction de rotation (10, 32, 56, 72) de la balle (1, 34, 50, 65) par rapport à la bande de matériau d'enrubannage (20, 36, 57, 74) provenant d'un rouleau d'alimentation en matériau d'enrubannage (5, 35, 58, 73), lequel moyen de capteur (28, 30, 59, 76) détecte que la balle (1, 34, 50, 65) est recouverte de matériau d'enrubannage.

6. Dispositif selon l'une des revendications 1 à 5, **caractérisé en ce qu'**un ou plusieurs moyens de capteurs (59, 63, 71, 75, 76) est/sont agencé(s) sur une table d'enrubannage (49, 64), qui fait tourner la balle (50, 65) pendant l'opération d'enrubannage autour d'un axe horizontal (33, 55) ainsi que d'un axe vertical (51, 66).

7. Dispositif selon la revendication 1 à 6, **caractérisé en ce qu'**au moins un moyen de capteur (24) est agencé sur un ou plusieurs bras rotatifs (3) tournant autour de la balle (1) pendant l'opération d'enrubannage.

8. Dispositif selon une ou plusieurs des revendications précédentes, **caractérisé par** une unité de commande électronique à boucle ouverte/fermée (22), qui comprend au moins un moyen de capteur (23, 47) pour détecter et/ou afficher le nombre d'enroulements de matériau d'enrubannage sur la balle (1, 34).

9. Dispositif selon la revendication 8, **caractérisé en ce que** le nombre d'enroulements de matériau d'enrubannage peut être détecté jusqu'au premier enroulement complet de la surface de balle entière en fonction du moyen de capteur (28, 30, 59, 76).

10. Dispositif selon la revendication 9, **caractérisé en ce que** le nombre d'enroulements de matériau d'enrubannage peut être stocké jusqu'au premier enroulement complet d'une balle (1, 34, 50, 65) dans une unité de mémoire de l'unité de commande électronique à boucle ouverte/fermée (22).

11. Dispositif selon l'une des revendications 8 à 10 précédentes, **caractérisé en ce que** l'unité de commande électronique à boucle ouverte/fermée (22) comprend une unité de saisie (21), à l'intérieur de laquelle le nombre souhaité de plis ou de couches de matériau d'enrubannage peut être saisi.

12. Dispositif selon une ou plusieurs des revendications précédentes, **caractérisé en ce que** l'unité de commande électronique à boucle ouverte/fermée (22) comprend un ordinateur qui, en fonction des valeurs détectées et/ou prédéfinies, détermine lui-même le nombre d'enroulements de matériau d'enrubannage, c'est-à-dire le nombre de tours de balle autour de l'axe (51, 66) ou le nombre de tours de bras rotatif (3, 44), nécessaire pour le nombre prédéfini de plis de matériau d'enrubannage qui doit être atteint.

13. Dispositif selon la revendication 12, **caractérisé en ce que** le nombre d'enroulements de matériau d'enrubannage est déterminé en tenant compte d'un facteur de sécurité qui peut être prédéfini dans une unité de saisie (21).

14. Dispositif selon une ou plusieurs des revendications 8 à 11 précédentes, **caractérisé en ce que** l'unité de commande électronique à boucle ouverte/fermée (22) comprend une unité de saisie (21), dans laquelle le degré de chevauchement (18, X, Y) de deux enroulements de matériau d'enrubannage successifs (19, 20, 57, 61, 67, 70) peut être directement ou indirectement saisi.

15. Dispositif selon une ou plusieurs des revendications précédentes, **caractérisé en ce que** le degré réel de chevauchement peut être directement ou indirectement influencé en cas d'écart par rapport au degré de chevauchement souhaité en fonction du moyen de capteur (24, 42, 43, 63, 71, 75).

16. Dispositif selon la revendication 15, **caractérisé en ce que** le moyen de capteur (24, 42, 43, 63, 71, 75) signale au moins à l'opérateur les écarts par rapport au degré de chevauchement souhaité.

17. Dispositif selon une ou plusieurs des revendications précédentes, **caractérisé en ce qu'**un capteur d'éclat est fourni, qui détecte la surface de balle non enrubannée comme mate et la surface de balle enrubannée comme éclatante.

18. Dispositif selon une ou plusieurs des revendications 1 à 16 précédentes, **caractérisé en ce qu'**un capteur de conductivité est fourni, qui répond aux différentes conductivités d'une balle (1) avec et sans enroulement de matériau enrubanné (2).

19. Dispositif selon une ou plusieurs des revendications 1 à 16 précédentes, **caractérisé en ce que** le dispositif comprend un capteur de pression, qui détecte les différentes valeurs de pression d'acheminement mesurées d'une surface de balle avec et sans matériau d'enrubannage.

20. Dispositif selon une ou plusieurs des revendications précédentes, **caractérisé en ce qu'**un moyen de capteur (24, 42, 63) répond à différentes épaisseurs de matériau d'enrubannage à travers les bandes de matériau d'enrubannage qui se chevauchent.

21. Dispositif selon une ou plusieurs des revendications précédentes, **caractérisé en ce qu'**un moyen de capteur (24, 42, 63, 71) détecte différents marquages de couleur ou couleurs de matériau d'enrubannage.

22. Dispositif selon une ou plusieurs des revendications précédentes, **caractérisé en ce qu'**un moyen de capteur (24, 29, 42, 59, 63, 71, 76) répond à différentes réflexions lumineuses ou acoustiques provenant de la surface de balle enrubannée et non enrubannée.

23. Dispositif selon une ou plusieurs des revendications précédentes, **caractérisé en ce qu'**un ou plusieurs moyens de capteur peuvent être adaptés à différentes dimensions de balle et/ou largeurs de matériau d'enrubannage.

24. Dispositif selon une ou plusieurs des revendications précédentes, **caractérisé en ce que** le moyen de capteur (24, 63, 71, 75) peut être ajusté à des chevauchements prédéfinis (18, X, Y) des deux bandes de matériau d'enroulement (19, 20, 57, 61, 67, 70).

25. Dispositif selon une ou plusieurs des revendications précédentes, **caractérisé en ce qu'**un moyen de capteur (24, 29, 42, 59, 63, 71, 75, 76) est agencé à une distance de la surface de balle.

26. Dispositif selon une ou plusieurs des revendications précédentes, **caractérisé en ce qu'**un moyen de capteur (30, 42, 43) est porté par un élément de guidage (41) suivant les contours de la balle.

27. Dispositif selon une ou plusieurs des revendications précédentes, **caractérisé en ce qu'**un capteur (42, 43) est fourni pour établir si la balle (34) tourne pendant l'opération d'enrubannage.

28. Dispositif selon la revendication 27, **caractérisé en ce que** le capteur (42, 43) se trouve en connexion active directe ou indirecte avec au moins un moyen de capteur supplémentaire (47) et l'unité de commande à boucle ouverte/fermée (22).

29. Dispositif selon la revendication 28, **caractérisé en ce que** le capteur (42, 43) est couplé à l'unité de commande électronique à boucle ouverte/fermée (22) et **en ce que** le processus d'enrubannage peut être influencé directement ou indirectement par le capteur (42, 43).
